# EUROPEAN PATENT SPECIFICATION

(11) **EP 1 543 431 B1**
(45) Date of publication and mention of the grant of the patent: **09.11.2011**
(21) Application number: 03793344.7
(22) Date of filing: 22.08.2003
(51) Int. Cl.: G06F 15/16, H04L 12/56

(54) **METHOD AND SYSTEM FOR COLLATING DATA IN A DISTRIBUTED COMPUTER NETWORK**
VERFAHREN UND SYSTEM ZUM KOLLATIONIEREN VON DATEN IN EINEM VERTEILTEN COMPUTERNETZWERK
PROCEDE ET SYSTEME D'ASSEMBLAGE DE DONNEES DANS UN RESEAU INFORMATIQUE REPARTI

(30) Priority: 23.08.2002 US 405553 P
(43) Date of publication of application: 22.06.2005
(73) Proprietor: Wisterium Development LLC, Wilmington, DE 19808 (US)
(72) Inventor: WARDWELL, David, R., Bedford, NH 03110-5010 (US)
(74) Representative: Kazi, Ilya
(86) International application number: PCT/US2003/026466
(87) International publication number: WO 2004/019178

(56) References cited:
- WO-A1-02/45328
- US-A1- 2002 169 851
- US-A1- 2003 120 723
- US-B1- 6 240 457
- US-B1- 6 421 321

## Description

### BACKGROUND OF THE INVENTION

### 1. Technical Field

The present invention relates to data processing systems in general, and in particular to distributed data processing systems. Still more particularly, the present invention is related to a method and apparatus for collating data in a distributed computer network.

### 2. Description of the Related Art

Generally speaking, a distributed data processing system partitions its computations across multiple compute nodes that are interconnected to each other. The distribution of the computations may be defined at load time or configured at run time. Each piece of data within the distributed data processing system typically has an associated attribute that defines its uniqueness. For example, a data stream from a coherently sampled analog-to-digital (A/D) transducer that may have associated attributes such as sampling time and sampling location. Data collected from transducers located at different locations are then transferred to a distributed network of compute nodes: Computations such as fast Fourier transforms, decimations, data selection algorithms, etc., would be applied independently on each of the nodes that results in each data stream path having independent latencies and/or throughput behavior. For many applications, there is a need to collate the result from the distributed nodes to perform another level of data transformation to be used as a result or as an input to another compute node.

WO 02/45328 describes a method that is operable to reorder and reassemble data packets from network traffic into unfragmented and in-order traffic flows for applications such as deep packet classification and quality of service determination. A queue engine stores incoming data packets in a packet memory that is controlled by a link list controller. A packet assembler extracts information from each data packet, particularly fields from the header information, and uses that information among other things, to determine if the data packet is fragmented or out of order, and to associate the data packet with a session id. If the packet is determined to be out of order, the queue engine includes a reordering unit, which is able to modify links with the link list controller to reorder data packets. A fragment reassembly unit is also included which is capable of taking fragments and reassembling them into complete unfragmented data packets.

Consequently, it is desirable to provide a method for collating data in a distributed computer network having multiple non-synchronous compute nodes.

### SUMMARY OF THE INVENTION

In accordance with a preferred embodiment of the present invention, a set of data packets is initially received from a group of non-synchronous compute nodes. Each of the set of data packets is provided by one of the non-synchronous compute nodes. Then, the data packets are inserted into a software container according to user predetermined rules for determining a logical order for the data packets. The common groups of the data packets are located within the container according to the user-predetermined rules. The container is protected against incomplete groups of the data packets due to system anomalies or quality of service within the distributed computer network. Finally, the logical group of the data packets that represent an aggregate packet is output from the non-synchronous compute nodes after the grouping criteria have been met.

All objects, features, and advantages of the present invention will become apparent in the following detailed written description.

### BRIEF DESCRIPTION OF THE DRAWINGS

The invention itself, as well as a preferred mode of use, further objects, and advantages thereof, will best be understood by reference to the following detailed description of an illustrative embodiment when read in conjunction with the accompanying drawings, wherein:
Figure **1** is a block diagram of a distributed computer network to which a preferred embodiment of the present invention is applicable;
Figure **2A** is a class diagram depicting how a multi-element queue interfaces with a user application, in accordance with a preferred embodiment of present invention;
Figure **2B** is a high-level logic flow diagram of a multi-element queue, in accordance with a preferred embodiment of the present invention; and
Figure **3** is a pictorial depiction of logical order of DataPackets in a memory.

### DETAILED DESCRIPTION OF A PREFERRED EMBODIMENT

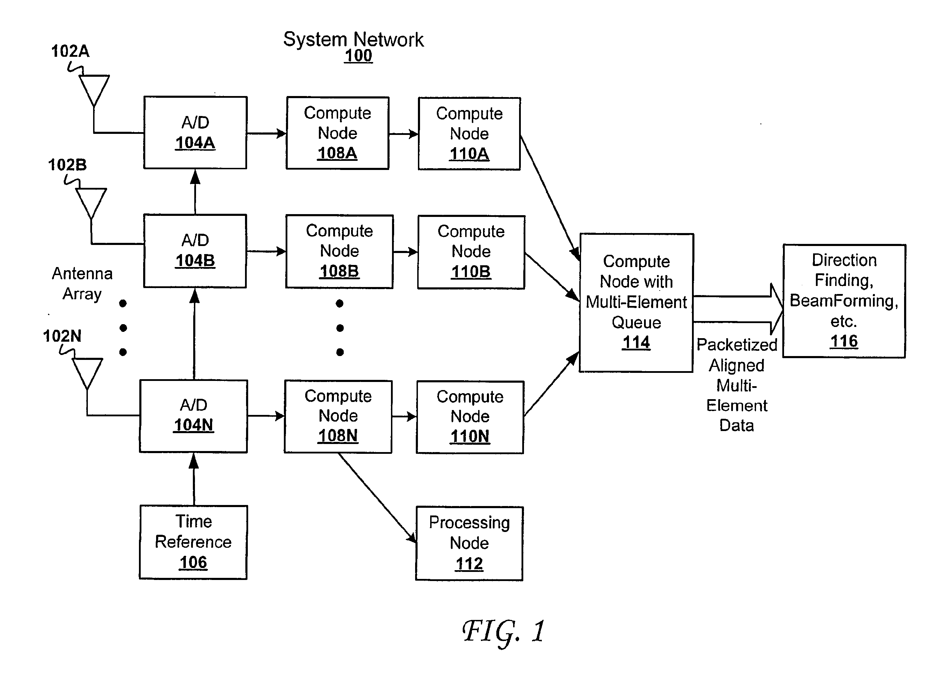

Referring now to the drawings and in particular to Figure 1, there is depicted a block diagram of a distributed computer network to which a preferred embodiment of the present invention is applicable. As shown, a system network **100** is coupled to an antenna array having antennae **102A-102N.** Antennae **102A-102N** transmits analog signals to respective analog-to-digital converters **104A-104N.** Analog-to-digital converters **104A-104N** then convert the analog signals to corresponding digital data streams. A time reference module 106 supplies a time code to each of analog-to-digital converters **104A-104N** to allow later synchronization of the data streams for processing.

Analog-to-digital converters **104A-104N** send the data streams to their respective compute nodes **108A-108N.** After receiving the data streams, compute nodes **108A-108N** preform preliminary processing on the data streams and then transmit the preprocessed data stream to their respective compute nodes **110A-110N**. Compute nodes **110A-110N** perform additional processing on the data streams before transmitting the data streams to a computer node **114.** In addition, the data streams from computer node **108N** can be sent to a special processing node **112** that is designed for receiving special types of information such as events and errors.

Compute node **114** includes a multi-element queue (MEQ) for collating data streams from computer nodes **110a-110N.** Computer node **114** also aligns the incoming data streams for a compute node **116** in which direction finding, beam forming, and/or other types of signal processing can be preformed. It is important that the data be aligned properly and accessible in order for computer node **116** to perform such types of signal processing on the data streams.

The MEQ within compute node **114** provides a mechanism by which a processing equipment can be used on time critical coherent type applications that require data fusion at certain points in order to accomplish a system task. The MEQ encapsulates the sorting and grouping logic from the data transform computation layer. The MEQ provides the data sorting and grouping task for streaming data packets throughout the system as well as a generic container that can be used in a client/server (request/response) architecture. The MEQ accomplishes the above-mentioned functions by providing a user a generic container that has the attributes of both an associative container as well as straightforward common containers/adapters such as queue and stack. From an interface point of view, the MEQ pushes independent data streams into the container and provides a way for the application to get "like grouped" data out of the container. In addition, the MEQ allows a user to specify data order, and timeout behavior to account for data fabric quality of service.

Basically, the MEQ provides the following four primary functions to a user:
1. Sort data in a defined manner based on user input or hard-coded rules. Based on the users data co-location requirements, the sorting may be done in more than one stage.
2. Group data in a defined manner based on user input or hard-coded rules. For simple data structures the sorting and grouping algorithm may be the same. For a more demanding co-location, the grouping algorithm may be more or less stringent but in general is based on different set of criteria.
3. Output data formatting of results. The user may require having the original data packets back in their entirety or having some co-mingled data structure for the result.
4. Protection against incomplete data sets when applied to a streaming/ordered application (*i.e.,* streaming data packets into the MEQ, in or out of user defined order, that needs to be collated at the output of the MEQ in user defined order for the purpose of a continuous data transform such as demodulation).

The implementation of the MEQ can be accomplished in many ways, depending on the development platform of an application. For example, the MEQ can be implemented in C++ language utilizing templates and Standard Template Library containers. A template is defined as a generic class that operates on generic types. A real class can be generated from a template by substituting real types for the generic types. A template implementation provides a user with a re-useable container that can easily be applied to many data accumulation tasks throughout a computer system. A template also provides an easy way for the user to provide sorting/grouping rules through the use of predicates into the container. Such technique provides an easy way for a user to modify the behavior of the MEQ without having to re-write or extend the base class functionality to perform a task. An explanation of a preferred MEQ design is provided as follows. Alternative MEQ designs that are applicable to a broader collection of object oriented software languages are also provided when appropriate.

### 1. MEQ as a Container

A container is defined as an object (such as a queue or list) that can contain other objects. In terms of object oriented design and description, the word *container* refers to a class (synonymous with object for the purposes of the present disclosure) that provides a minimal but complete set of interface methods to complete a task in its entirety. An MEQ is a container that contains other containers/adapters to perform the task. In other words, the MEQ includes one or more classes/objects to complete the task. The composition of the MEQ includes storage classes, sort classes, and time utility classes that work together inside a "black box" known as MEQ. As mentioned previously, an MEQ can be implemented using C++ templates. The C++ template provide the mechanism by which a user can give the MEQ the logic to sort and group its elements to meet the compute nodes criteria. An example of an MEQ template declaration is as follows:

```
// Full Template declaration for the MEQ
   template<
          typename T,
          typename SortPred,
          typename GroupPred,
          typename ResDest,
          typename PrintFunc = PrintDefault<T>,
          class Cont = std::list<T>
          >
   class MEQueue T
   {
   public:
          // Constructor
          McSignalQueue_T(ResDest*res) : timeout (3.0) {} ;
          // Default constructor
          McsignalQueue_T () {} ;
          // Default destructor
          ~McSignalQueue_T () {} ;
          // Method to push a single T object into MEQ
          void push(const T x) {};
          // Method to remove the front group from the MEQ
          void pop() f;
          // Method to get first available group from the front of
                 the MEQ
          std: :vector<T> front(){};
          // Returns a count of all unique grouped entries NOT
                 list. size ()
          UINT32 getSetSize(){};
          // This defines the number of entries in a group to
                 satisfy the output criteria
          void setGroupSize(UINT32 sz){};
          // Number of levels of group as defined by user predicate
          void setGroupLevel(UINT32 lvl){};
          // Number of levels of sort as defined by user predicate
          void setsortuvel(uINT32 lvl){};
          // Destination for output results (Callback pointer)
          void setResultDestination(ResDest*rd){};
         // Method to view Contents of sorted entries in MEQ
                Output format determined by user PrintFunc from
                template argument
         // list
         void listContentso();
         // Method to set the number of seconds for timeout on a
                group of T entries
         void setTimeOut(float t){};
         // Callback from timer object that removes a group of T
                entries form the list <T> container
         void groupTimeout(){};
   private:
         // Method to check if timer has expired indicating that
                the front of the MEQ has not root the CallBack
                criteria
         void checkReturnedTimers(){});
         // Method to check for logical group based on user
                predicate
         // If one is found send entire group to destination
                object
         void checkForGroup(){};
   protected:
         // Actual storage container, default is std::list<T>
         Cont c;
         // Destination pointer
         ResDest* destination;
         // Timeout value in seconds for the front of the MEQ
                container
         double timeoutValueSeconds;
         // Elasticity length to ensure ordered sets
         UINT32 elasticityLength;
          // Timer object used to signal a timeout for front of MEQ
         Timer queueFrontTifneout;
          // Defines the group range size expected
          INT32 groupSizc;
          // Defines the number of group levels and sort levels for
                the input data
         UINT32 groupLevels;
         UINT32 sortLevels;
   };
```

The template in the above-mentioned example provides a user with four fields to control the behavior of the container. The first field is the actual data type that will be operated on. This defines the data type for the storage classes within the MEQ that are used for the actual accumulation of data. The second field in the declaration is the Sort predicate, which is also a template. The user provides such predicate to dictate how data should be placed into the underlining storage container of the MEQ. The third field is the Group predicate that allows the user to define the actual output criteria of the MEQ. Many applications may have the same sort and group predicates, but in a complex implementation, such scenario may not be possible. The fourth field is the User class that will be informed in cases of timeouts or data availability. This can be viewed as a callback class type. A callback is a call to a function when some event occurs, and a callback class is a class that defines such a function. The declaration does not necessarily require such if the user program implemented a polling technique or the user program opt to use a function object as the callback. In any case, in this particular implementation, the queue is responsible for callbacks to the using object when a timeout occurs or when a group of data is available.

### II. Sort and Group data in a defined manner based on user input or hard-coded rules

A queue typically refers to a first-in-first-out architecture when the structure is in a single element. With the MEQ, the first structure in is not necessarily the first structure out. The sort and group algorithms determine the input-output order. A better analogy is a priority queue architecture where the input is ordered by a simple less than or greater than operation within the queue to determine order. Still, the MEQ is different due to the fact that one element into the queue can result in N elements out of the queue.

The data structure provides the information needed to perform the sort and group functionality. The example presented in this description has a data structure that includes a payload (A/D samples) and a Header. The Header is passed through the system with the payload. The Header provides descriptive information for the compute nodes operations but also provides a means in which data packets can be sorted and grouped. An example of a data packet format for the application applicable to the computer network shown in Figure 1 is as follows:

```
    class Header
    {
   public:
          // sample time NOT computer time
          long seconds;
          long nanoseconds;
          // Identification of where the data was originated
          UINT32 dataID;
          // Represents an ID for.the requestor of the data
          std::string requestorID;
    };
    class DataPacket
    {
   public:
          Header header;
          Std::vector<Float*> floatPayload;
    };
```

In Figure 1, the DataPacket objects originate from physically separate system compute nodes each of which has attributes to identify them selves and provide the necessary information for each DataPacket created. The DataPackets traverse the system through some type of data network fabric. At each compute node, the DataPacket is manipulated through various algorithms. At computer node 114 of Figure 1, the algorithm requires data to be aligned in such a way that additional algorithms can be used. At this point, an MEQ is required to re-establish the data alignment that was lost in the data compute nodes and fabric. As each packet arrives in the node, the user's program pushes it into the MEQ.

The DataPackets arrive at the MEQ from physically different compute nodes but the Header information in each packet describes the attributes of sample time, which is the same between compute nodes, dataID and requestlD. It is these attributes, in this example, that are used by the MEQ to perform the sort and group algorithms to perform the realignment of the DataPackets.

The underlining structure of the MEQ is another container such as a linked list. The Sort and group predicates are used by the MEQ to place these individual DataPackets into the linked list. The Sort and group predicates are given to the MEQ by the user's application. The Predicates define how to sort and group the data and when to make the data available at the output of the MEQ. In this particular implementation, the Predicates are classes that provide an overloaded 0 operator to allow for comparisons of DataPackets for the purpose of sorting and grouping. The two predicates in this example are shown as follows:

```
 template<typename T>
 class SortPredicate : public std::binary function<T;T,bool>
 public:
   SortPredicate(UINT32 lvl = 0)
   {
         currentSortLevel = lvl;
   }
   bool operator ( ) (T& x, T& y)
   { if { (x->header.dataID < y->header.dataID)
                return 1;
          } else {
                return 0;
   } }
 private:
 UINT32 currentSortLevel;
 };
 template<typename T>
 Class { GroupPredicate : public std::binary_function<T,T,bool>
 public:
   GroupPredicate(UINT32 lvl = 0)
   { currentGroupLevel = lvl;
         currentGroupLevel = lvl;
   }
   bool operator() (T& x, T& y)
   { if (currentGroupLevel == 0) {
                //User time class with Less Than overloaded operator
                Time epochTimeX(x->header.seconds,
                x->header.nanoseconds);
                Time epochTimeY(y->header.seconds,
                y->header.nanoseconds);
                if(epochTimeX < epochTimeY) {
                       return 1;
                } else {
                       return 0;
                }
         } else if(currentGroupLevel == 1) {
         if( x->header.requestID < y->header.requestID) {
                      return 1;
                } else {
                      return 0;
                }
   }
  private:
         UNIT32 currentGroupLevel;
 }:
```

These predicates are provided to the MEQ as objects to be used for the purpose of Sorting and Grouping the data. The MEQ itself remains pure in this example by not knowing the internal structure of the DataPacket but only to use the predicates to sort and group.

### III. Output data formatting of results

The user gets the data as follows. The widely accepted interface to a storage container is that the user poll for data. One reason for doing such is simplicity of implementation and encapsulation of functionality. Since the MEQ has attributes such as setSize, get methods provide a way for the user to poll for set size. Set size in the context of Multi-Element Queue refers to a valid set of DataPackets that meet the Group predicate rule, which was provided by the user.
int getSetSize() {return setSize;}

To get the data the MEQ adheres to a typical queue interface of:
std::vector<T> front();

The difference being what is returned is not T (DataPacket*) but a vector of T which contains the sorted and grouped dataPackets in this example.

The polling method works well for discrete data packets in a given data stream from a particular compute node that has no inherent relationship with the other data packets in the same data stream. For continuous data that may be used in applications such as demodulation, however, the polling method is cumbersome and time-consuming. As such, the MEQ provides the user to specify a callback method that once the group predicate is met, the vector of results are sent to the user's specified interface. This technique simplifies the user's need to handle the data thus the asynchronous DataPackets that are being transferred over the applications transport layer appear to the application to be synchronous in a user-defined manner. This functionality of the MEQ isolates the compute node applications from the systems transport layer quality of service (*i.e.*, latency variances, data ordering etc).

### IV. MEQ Design

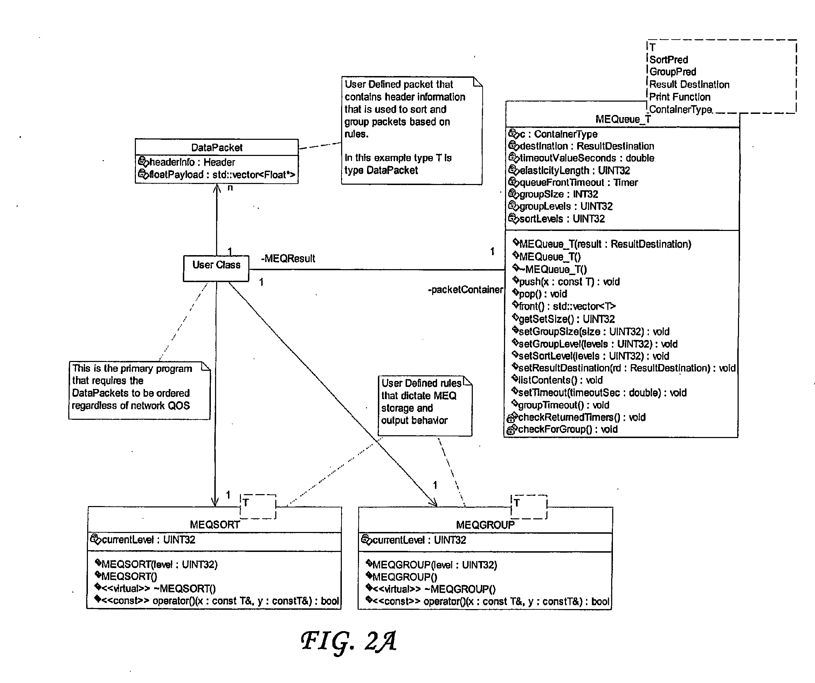

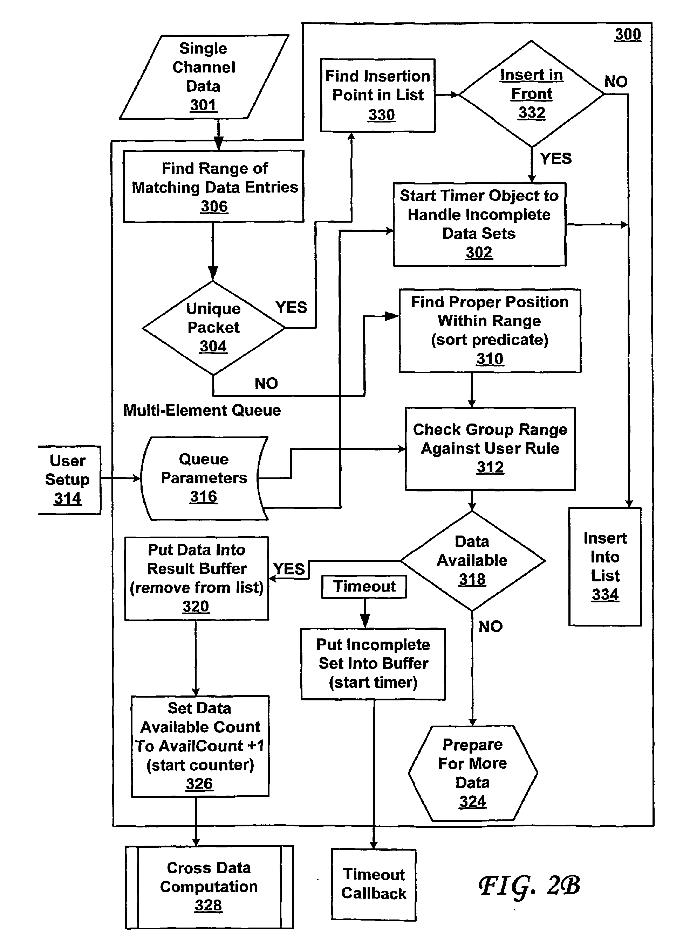

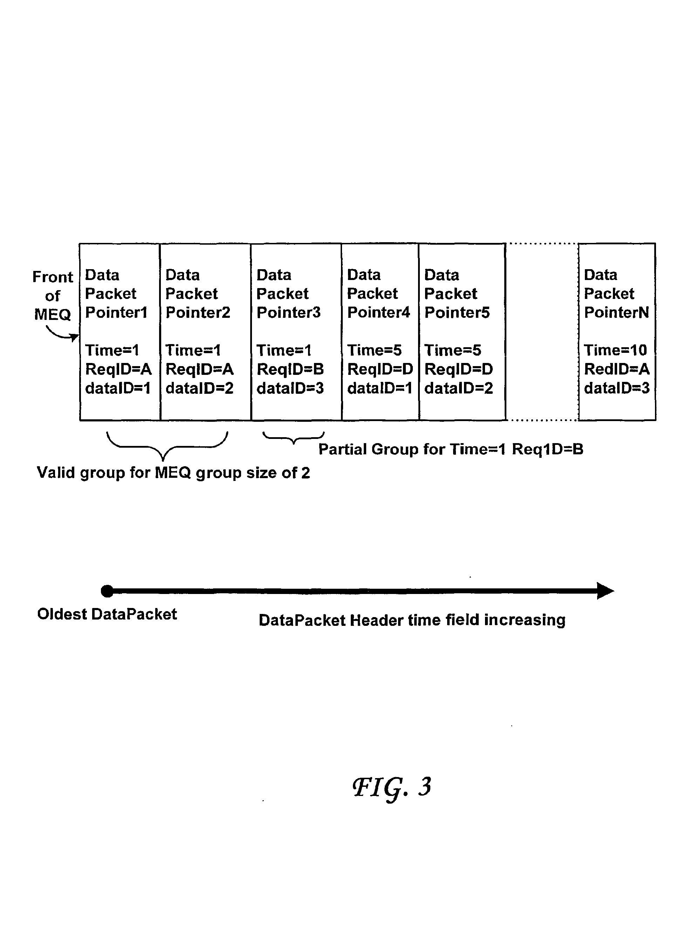

The MEQ design encapsulates the functionality to manipulate data packets in a distributed system to make applications such as beamforming and/or any other request/response type application possible in a distributed computer network. The MEQ provides interfaces for pushing data into and retrieving data out of memory in a user defined manner independent of the data payload. Given this, the MEQ architecture can be summarized in various ways referred to as system views. The first view (Figure 2A) is a class diagram that depicts how the MEQ interfaces with the user's application. The second view (Figure **2B****)** depicts a high-level logic flow diagram of a detailed sequence diagram implementation. The third view (Figure **3****)** represents the actual memory manipulation that takes place to perform the MEQ function that fully describes the sorting and grouping algorithms. Each view of the system summarizes the design of the MEQ in its entirety.

### V. Class Diagram View

The UML class diagram of Figure **2A** illustrates the MEQ interfaces and system associations the UML class has with the user's application. The MEQ itself has all the defined interfaces that were outlined in section I. The MEQ is an aggregate part of the user program. The MEQ provides a service to the user's program through a complete set of interfaces and behavior. The user's program includes two predicates that were summarized in section II and an input interface used by the system network for receiving DataPackets from other computer nodes. The user's application gives the MEQ associations to the predicates though the template argument list. The predicates define the rules to sort and group incoming DataPackets. The last significant portion of the MEQ design centers around the internal timer class that is an aggregate part of the MEQ.

The flow diagram of Figure **2B** represents the internal logic/data flow of the MEQ design. As DataPackets are MEQ::pushed into the MEQ, the group predicate is used by an equal range algorithm to find the position within the queue to place the packet, as shown in block **306.** The result of such search returns a lower and upper bound that represents the range in which the new packet can be inserted. A check is performed on that range to determine if the packet is unique, as depicted in block **304.** If it is not unique, the final position within the MEQ list is determined by using the upper and lower bounds of the first search (the group) and using a second algorithm (sort) to determine the position within the group to place the new packet, as shown in block **310.** At this point in the process, the UMQ::fronto is checked to determine whether a valid group is ready to be made available to the user, as shown in block **318.** The group of DataPackets represent a logical DataPacket of N number payloads that were created within the computer network, if the group output rules are met, as depicted in block **320.** The DataPackets are copied to an output message and made available to the user's application, as shown in block **326.** If the group output criteria was not met, as depicted in block **324,** internal logic is prepared for the next input DataPacket.

If the input DataPacket is unique, the insertion point for the DataPacket is found, as shown in block **330.** The insertion point is checked to determine if it is in ythe front of the MEQ, as depicted in block **332.** If it is in the front, a timer object is started to protect the MEQ from incomplete data sets, as shown in block **302.** Finally, the DataPacket is inserted into the MEQ in the proper position, as depicted in block **334.**

Manipulating the memory structure of the MEQ can be done in many different ways. The key to the MEQ design is that the DataPackets pushed into the MEQ are put into the MEQ list in an order based on the Group predicate provided by the user. Within the group the DataPackets are then placed into a logical order (*i.e.,* sorted) also based on a user predicate. The actual algorithm used to implement may vary but an equal range algorithm is used for this example. The equal range algorithm uses the predicates to provide a range of values where the predicate is satisfied or in other words a range of values that are equal.

For the example provided above, the Group Predicate dictates the output availability based on the lower and upper bound and the group size attribute that are both provided by the primary user program. The Group Predicate is also used to define the primary order of the data packets within the MEQ. Referring to the Group Predicate, the first level (of sorting provided is based on the DataPacket time field (seconds, nanoseconds). This time represents the EPOCH time of when the samples were created. The result of running an equal range algorithm with the Group Predicate level 0 is that the list would be ordered in time as defined by the DataPacket header. The logical order of DataPackets in memory is shown in Figure **3****.**

As shown in Figure **3****,** the time is ordered in ascending order from the front to the back of the MEQ. Any DataPackets with the same time stamp are, logically adjacent to each other in the list.

The second level of sort within the group is performed using the same predicate with a group level of 1. This has the effect of ordering DataPackets, within a first level group, in request ID order (*i.e.*, for time stamp of 1 there are 3 entries, these 3 entries are then ordered by request ID in ascending order). The result of the Group Predicate in this example for time stamp equal to one is two groups. The first has a Request ID of A and the second has a Request ID of B. If the MEQ group size were equal to 2, the Group rules for Time stamp equal to one would be met.

The last algorithm used to organize the MEQ memory list can also be an equal range algorithm or a more straightforward algorithm such as a linear search. In either case, for this example, the DataPackets are sorted as defined by the SortPredicate that was provided to the MEQ. Again, the Sort predicate puts the packets within a Group in ascending order based on data ID field of the DataPacket Header.

The memory manipulation that takes place in the MEQ is completely dictated by the rules given to it by the user application. The MEQ is a generic container that allows the user to push Datapackets in and provides methods for the user's applications to get grouped DataPackets Out. The Grouping and Sorting of the DataPackets takes place in every MEQ::pusho method invocation.

### IV. Protection against incomplete Data Sets when applied to a streaming/ordered application

The output of the MEQ is a set of input DataPackets. The underlining transport mechanism may not provide a level of service to guarantee delivery under all circumstances. This would leave incomplete sets in the MEQ that would never complete thus create a memory leak (a memory leak occurs when the memory is allocated by is never released). To protect against this condition the MEQ has a timeout mechanism that will dump incomplete sets. The timeout duration is based on a class attribute the user initializes at construction time.

Time ordering presents another area of complexity for the MEQ. The user must provide a worse case accumulation size before a Set is presented to the output. As such, data that arrives out of order would be accumulated in order for the number of DataPackets specified by the user. This ensures the first set out of the MEQ is in proper order as dictated by the user-defined predicates.

As has been described, the present invention provides a mechanism by which commercially available processing equipment can be used on time critical coherent type applications that require data fusion at certain points to accomplish the system task. The MEQ encapsulates the sorting and grouping logic from the data transform computation layer. The MEQ provides the data sorting and grouping task for streaming data packets throughout the system as well as a generic container that could be used in a client/server (request/response) architecture. The MEQ accomplishes this by providing the user a generic container that has the attributes of both an associative container as well as straightforward common containers/adapters such as queue and stack. From an interface point of view, the MEQ provides a method to push independent data streams into the container and another method that provides a way for the application to get "like grouped" data out of the container. Additionally, the MEQ provides methods to allow the user to specify data order, and timeout behavior to account for data fabric quality of service. The primary advantage of the MEQ is the fact that it de-couples a compute node task from the network topology and data fabric Quality Of Service.

It is also important to note that although the present invention has been described in the context of a fully functional computer system, those skilled in the art will appreciate that the mechanisms of the present invention are capable of being distributed as a program product in a variety of forms, and that the present invention applies equally regardless of the particular type of signal bearing media utilized to actually carry out the distribution. Examples of signal bearing media include, without limitation, recordable type media such as floppy disks or CD ROMs and transmission type media such as analog or digital communications links.

## Claims

1. A method for collating data in a distributed computer network having non-synchronous compute nodes, said method comprising:
receiving a set of data packets from each of a plurality of physically separated non-synchronous compute nodes (108, 110), wherein each of said sets of data packets is provided by a respective one of said non-synchronous compute nodes (108, 110);
inserting said data packets into a software container according to user predetermined rules for determining a logical order for said data packets;
locating common groups of said data packets within said container according to said user predetermined rules;
protecting said container against incomplete groups of said data packets due to system anomalies or quality of service within said distributed computer network; and
outputting logical groups of said data packets that represent an aggregate packet from said non-synchronous compute nodes after said grouping criteria has been met.

2. A method according to Claim 1, wherein the inserting is carried out in accordance with individual packet time reference.

3. A method according to Claim 2, wherein the locating includes locating common groups of said data packets within said container according to individual packet time reference.

4. A method according to Claim 3, wherein the outputting includes outputting logical group of said data packets that represent time synchronous packets from said non-synchronous compute nodes after said grouping criteria has been met.

5. An apparatus for collating data in a distributed computer network having non-synchronous compute nodes, said apparatus comprising:
means for receiving a set of data packets from each of a plurality of physically separated non-synchronous compute nodes (108, 110), wherein each of said sets of data packets is provided by a respective one of said non-synchronous compute nodes (108, 110);
means for inserting said data packets into a software container according to user predetermined rules for determining a logical order for said data packets;
means for locating common groups of said data packets within said container according to said user predetermined rules;
means for protecting said container against incomplete groups of said data packets due to system anomalies or quality of service within said distributed computer network; and
means for outputting logical group of said data packets that represent an aggregate packet from said non-synchronous compute nodes after said grouping criteria has been met.

6. Apparatus according to Claim 5, wherein said means for inserting further includes means for inserting said data packets into a software container according to individual packet time reference.

7. Apparatus according to Claim 5 or 6, wherein said means for locating further includes means for locating common groups of said data packets within said container according to individual packet time reference.

8. Apparatus according to anyone of Claims 5 to 7, wherein said means for outputting further includes means for outputting logical group of said data packets that represent time-synchronous packets from said non-synchronous compute nodes after said grouping criteria has been met.

9. A computer program product residing on a computer usable medium for collating data in a distributed computer network having non-synchronous compute nodes, for carrying out the method according to anyone of Claims 1 to 4.

## Patentansprüche

1. Verfahren zum Kollationieren von Daten in einem verteilten Computernetzwerk, welches asynchrone Berechnungsknoten aufweist, wobei das Verfahren umfasst:
Empfangen einer Gruppe von Datenpaketen von jedem von mehreren physikalisch getrennten, asynchronen Berechnungsknoten (108, 110), wobei jede der Gruppen von Datenpaketen durch einen jeweiligen asynchronen Berechnungsknoten (108, 110) zur Verfügung gestellt wird;
Einführen der Datenpakete in einen Software-Container entsprechend von einem Benutzer vorgegebenen Regeln zur Bestimmung einer logischen Reihenfolge für die Datenpakete;
Auffinden gemeinsamer Gruppen der Datenpakete in dem Container entsprechend den vom Benutzer vorgegebenen Regeln;
Schützen des Containers gegen nicht komplette Gruppen der Datenpakete infolge von Systemanomalitäten oder Servicequalität innerhalb des verteilten Computernetzwerkes; und
Ausgabe logischer Gruppen der Datenpakete, welche ein Aggregatpaket repräsentieren, von den asynchronen Berechnungsknoten, nachdem die Gruppierungskriterien erfüllt wurden.

2. Verfahren nach Anspruch 1, bei welchem das Einführen entsprechend einer individuellen Paketzeitbezugsgröße durchgeführt wird.

3. Verfahren nach Anspruch 2, bei welchem das Auffinden das Auffinden gemeinsamer Gruppen der Datenpakete in dem Container entsprechend einer individuellen Paketzeitbezugsgröße umfasst.

4. Verfahren nach Anspruch 3, bei welchem die Ausgabe das Ausgeben logischer Gruppen der Datenpaketen, welche zeitsynchrone Pakete repräsentieren, von den asynchronen Berechnungsknoten umfasst, nachdem die Gruppierungskriterien erfüllt wurden.

5. Einrichtung zum Kollationieren von Daten in einem verteilten Computernetzwerk, welches asynchrone Berechnungsknoten aufweist, wobei die Einrichtung aufweist:
eine Vorrichtung zum Empfangen einer Gruppe von Datenpaketen von jedem von mehreren physikalisch getrennten asynchronen Berechnungsknoten (108, 110), wobei jede der Gruppen von Datenpaketen durch einen jeweiligen asynchronen Berechnungsknoten (108, 110) zur Verfügung gestellt wird;
eine Vorrichtung zum Einführen der Datenpakete in einen Software-Container entsprechend von einem Benutzer vorgegebenen Regeln zur Bestimmung einer logischen Reihenfolge für die Datenpakete;
eine Vorrichtung zum Auffinden gemeinsamer Gruppen der Datenpakete in dem Container entsprechend den vom Benutzer vorgegebenen Regeln;
eine Vorrichtung zum Schützen des Containers gegen unvollständige Gruppen der Datenpakete infolge von Systemanomalitäten oder Servicequalität in dem verteilten Computernetzwerk; und
eine Vorrichtung zur Ausgabe einer logischen Gruppe der Datenpakete, welche ein Aggregatpaket repräsentieren, von den asynchronen Berechnungsknoten, nachdem die Gruppierungskriterien erfüllt wurden.

6. Einrichtung nach Anspruch 5, bei welcher die Vorrichtung zum Einführen weiterhin eine Vorrichtung zum Einführen der Datenpakete in einen Software-Container entsprechend einer individuellen Paketzeitbezugsgröße aufweist.

7. Einrichtung nach Anspruch 5 oder 6, bei welcher die Vorrichtung zum Auffinden weiterhin eine Vorrichtung zum Auffinden gemeinsamer Gruppen der Datenpakete in den Container entsprechend einer individuellen Paketzeitbezugsgröße aufweist.

8. Einrichtung nach einem der Ansprüche 5 bis 7, bei welcher die Vorrichtung zur Ausgabe weiterhin eine Vorrichtung zum Ausgeben logischer Gruppen der Datenpakete, welche zeitsynchrone Pakete repräsentieren, von den asynchronen Berechnungsknoten aufweist, nachdem die Gruppierungskriterien erfüllt wurden.

9. Computerprogrammprodukt, das auf einem von einem Computer nutzbaren Medium liegt, zum Kollationieren von Daten in einem verteilten Computernetzwerk, welches asynchrone Berechnungsknoten aufweist, zur Ausführung des Verfahrens nach einem der Ansprüche 1 bis 4.

## Revendications

1. Procédé destiné à assembler des données dans un réseau informatique distribué présentant des noeuds de calcul informatique non synchrones, ledit procédé comprenant les étapes ci-dessous consistant à :
recevoir un ensemble de paquets de données en provenance de chacun d'une pluralité de noeuds de calcul informatique non synchrones physiquement séparés (108, 110), dans lequel chacun desdits ensembles de paquets de données est fourni par l'un respectif desdits noeuds de calcul informatique non synchrones (108, 110) ;
introduire lesdits paquets de données dans un conteneur logiciel selon des règles utilisateur prédéterminées, en vue de déterminer un ordre logique pour lesdits paquets de données ;
localiser des groupes communs desdits paquets de données au sein dudit conteneur selon lesdites règles utilisateur prédéterminées ;
protéger ledit conteneur contre des groupes incomplets desdits paquets de données, occasionnés par des anomalies de système ou une qualité de service au sein dudit réseau informatique distribué ; et
générer en sortie des groupes logiques desdits paquets de données, lesquels représentent un paquet agrégé à partir desdits noeuds de calcul informatique non synchrones, dès lors que ledit critère de regroupement a été satisfait.

2. Procédé selon la revendication 1, dans lequel l'étape d'introduction est mise en oeuvre selon une référence temporelle de paquets individuels.

3. Procédé selon la revendication 2, dans lequel l'étape de localisation consiste à localiser des groupes communs desdits paquets de données au sein dudit conteneur selon une référence temporelle de paquets individuels.

4. Procédé selon la revendication 3, dans lequel l'étape de génération en sortie consiste à générer en sortie un groupe logique desdits paquets de données, représentant des paquets synchrones dans le temps, à partir desdits noeuds de calcul informatique non synchrones, dès lors que ledit critère de regroupement a été satisfait.

5. Dispositif destiné à assembler des données dans un réseau informatique distribué présentant des noeuds de calcul informatique non synchrones, ledit dispositif comprenant :
un moyen pour recevoir un ensemble de paquets de données en provenance de chacun d'une pluralité de noeuds de calcul informatique non synchrones physiquement séparés (108, 110), dans lequel chacun desdits ensembles de paquets de données est fourni par l'un respectif desdits noeuds de calcul informatique non synchrones (108, 110) ;
un moyen pour introduire lesdits paquets de données dans un conteneur logiciel selon des règles utilisateur prédéterminées, en vue de déterminer un ordre logique pour lesdits paquets de données ;
un moyen pour localiser des groupes communs desdits paquets de données au sein dudit conteneur selon lesdites règles utilisateur prédéterminées ;
un moyen pour protéger ledit conteneur contre des groupes incomplets desdits paquets de données, occasionnés par des anomalies de système ou une qualité de service au sein dudit réseau informatique distribué ; et
un moyen pour générer en sortie des groupes logiques desdits paquets de données, lesquels représentent un paquet agrégé, à partir desdits noeuds de calcul informatique non synchrones, dès lors que ledit critère de regroupement a été satisfait.

6. Dispositif selon la revendication 5, dans lequel ledit moyen d'introduction comprend en outre un moyen d'introduction desdits paquets de données dans un conteneur logiciel selon une référence temporelle de paquets individuels.

7. Dispositif selon la revendication 5 ou 6, dans lequel ledit moyen de localisation comporte en outre un moyen pour localiser des groupes communs desdits paquets de données au sein dudit conteneur selon une référence temporelle de paquets individuels.

8. Dispositif selon l'une quelconque des revendications 5 à 7, dans lequel ledit moyen de génération en sortie comporte en outre un moyen pour générer en sortie un groupe logique desdits paquets de données, représentant des paquets synchrones dans le temps, à partir desdits noeuds de calcul informatique non synchrones, dès lors que ledit critère de regroupement a été satisfait.

9. Produit-programme informatique résidant sur un support informatique utilisable pour assembler des données dans un réseau informatique distribué présentant des noeuds de calcul informatique non synchrones, en vue de mettre en oeuvre le procédé selon l'une quelconque des revendications 1 à 4.
